# EUROPEAN PATENT SPECIFICATION

(11) **EP 2 876 950 B1**
(45) Date of publication and mention of the grant of the patent: **19.04.2017**
(21) Application number: 13193760.9
(22) Date of filing: 21.11.2013
(51) Int. Cl.: H04W 64/00

(54) **A WIRELESS LOCATION DETERMINING SYSTEM**
DRAHTLOSES POSITIONSBESTIMMUNGSSYSTEM
SYSTÈME DE DÉTERMINATION DE LOCALISATION SANS FIL

(43) Date of publication of application: 27.05.2015
(73) Proprietor: IRCOi BVBA, 9850 Nevele (BE)
(72) Inventor: Ronse, Frederick, B-8301 Duinbergen (BE)
(74) Representative: Brantsandpatents bvba

(56) References cited:
- GB-A- 2 449 930
- US-A1- 2013 163 440
- US-A1- 2013 273 943
- "3rd Generation Partnership Project; Technical Specification Group Radio Access Network; Stage 2 functional specification of User Equipment (UE) positioning in UTRAN (Release 11)", 3GPP STANDARD; 3GPP TS 25.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 17 September 2012 (2012-09-17), pages 1-80, XP050649147, [retrieved on 2012-09-17]

## Description

### Field of the Invention

The present invention generally relates to a wireless location determining system. This invention more specifically for determining the location of movable objects, vehicles, people, animals, etc. by means of a wireless device, such as for example a wireless tag.

### Background of the Invention

A wireless location determining system is for example known from US2006/0009240A1, where a wireless tag comprising an identifier is detectable by setting up a short range wireless communication with a mobile phone when the tag is in the vicinity of this mobile phone. Such short range wireless communication can for example be effected by means of these communication standards: Bluetooth; IEEE 802.11, Wifi, WiMax, HomeRF. Such a mobile phone could thus for example be a Bluetooth enabled mobile phone. This mobile phone then determines the location of the wireless tag and transmits this data via a communication network, such as for example a cellular network comprising a plurality of cellular network base transceiver stations or a satellite telephone network comprising satellite based transceiver stations to a location server. The problem with such an approach is that in order to trace a tag at an unknown location a vast number of mobile phones must be available as in general the detection range of each individual mobile phone for the tags is limited to for example a few metres. Additionally, the mobile phones and the tags must be able to establish a dedicated communication link, such as for example a Bluetooth connection, which often results in the necessity of complex and power intensive hardware and/or software both at the side of the wireless tag as at the mobile phone and cumbersome authentication requirements. Further there is also known a wireless location determining system which makes use of a wireless device comprising a beacon parameter formatted as a mobile phone parameter and a wireless transmitter transmitting a beacon signal comprising this beacon parameter, thereby enabling a location processing module to determines a range of locations in function of this beacon signal, from "3rd Generation Partnership Project; Technical Specification Group Radio Access Network; Stage 2 functional specification of User Equipment (UE) positioning in UTRAN (Release 11)", 3GPP STANDARD; 3GPP TS 25.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 17 September 2012 (2012-09-17), pages 1-80, XP050649147. Additionally there is known from US2013/163440 a relay node which transmits two beacon parameters, one formatted as a base transceiver station parameter and one formatted as a mobile phone parameter.

A further wireless location system is known from WO2008/113104, where a wireless tag in the form of an RFID tag is detectable by means of a two stage localisation method. Such location system is for example used in a warehouse context in which first a coarse localisation of the RFID tag is done by means of fixed receivers at predetermined locations in the warehouse that are able to determine the location of the RFID tag to within range of 5 to 6 metres. Subsequently a mobile unit, such as for example a forklift is instructed to proceed to this first coarse localisation range and perform a second more precise localisation with an RFID detection system mounted on the forklift in order to reach an accuracy of for example 1m. Although such a setup is feasible in a dedicated and limited area, such as for example a warehouse, it is clear that such a system has limited scaling capabilities as it requires the setup of sufficient dedicated RFID detection systems for the course detection and requires control over the mobile units for steering them to the first coarse location in order to perform the second more precise localisation, which also requires a dedicated RFID detection system.

Therefor there still exists a need for a location determining system with an improved scalability, reduced complexity, reduced power usage and simple setup.

### Summary of the Invention

According to a first aspect of the invention there is provided a wireless location determining system comprising:
- A plurality of base transceiver stations, each configured to transmit wireless base transceiver station signals comprising a base transceiver station parameter and to receive wireless mobile phone signals each comprising a mobile phone parameter from a mobile phone;
- A plurality of mobile phones, each configured to transmit the wireless mobile phone signals and to receive the wireless base transceiver station signals;
- A location processing module connected to the base transceiver stations and the mobile phones by means of a communication network; and
- A wireless device; wherein
- The wireless device comprises a first beacon parameter formatted as a mobile phone parameter, and a wireless transmitter that is configured to transmit a first beacon signal comprising the first beacon parameter; and 15 - The location processing module is configured to:
   - Determine a first range of possible locations of the wireless device in function of the connected base transceiver stations that detected the first beacon signal;
CHARACTERISED IN THAT
- The wireless device (100) further comprises a second beacon parameter formatted as a base transceiver station parameter, and the wireless transmitter of the wireless device is further configured to transmit a second beacon signal comprising the second beacon parameter; and
- The location processing module (50) is further configured to:
   - Connect to a plurality of mobile phones present in the first range;
   - Determine a second range of possible locations of the wireless device in function of the connected mobile phones that detected the second beacon signal, the second range being smaller than the first range.

In this way the wireless location determining system acquires a simple setup which is able to make use of the hardware and software functionality already available to the base transceiver stations and the mobile phones for detection of the beacon signals comprising the beacon parameters emitted by the wireless device. As terrestrial and/or satellite based base transceivers have already an extensive established worldwide coverage, the wireless location determining system can be implemented on such a scale without requiring additional dedicated hardware or software for detection of the beacon signals comprising the beacon parameters. Additionally sufficient precision can be realised efficiently as first a coarse localisation is possible by means of the wide range detection by the base transceiver stations and the subsequent more narrow range detection by the mobile phones. This is furthermore realised without requiring dedicated hardware or highly sophisticated mobile phones. Any basic mobile phone that is capable of detecting the parameters of the base transceiver station, can be used. This further improves precision of the second stage of the localisation as statistically the number of phones being in sufficient proximity of the wireless device, to perform the detection will be higher. Finally the wireless device, preferably in the form of a wireless tag, only requires the transmission of a simple beacon signal and does not require the setup of a dedicated or bidirectional connection with the detecting mobile phone. This allows to realise a low power setup for the wireless device. Such a low power setup also improves detectability of the wireless device as it maximizes the operating time of the wireless device for the amount of battery power available. It also allows for decreasing the size of the battery and other components of the wireless device so that it can be easily implemented as a wireless tag. By simply transmitting a first beacon parameter formatted as a mobile phone parameter and a second beacon parameter formatted as a base transceiver station parameter, the wireless device allows for both a wide and more narrow range detection by the base transceiver stations and the mobile phones respectively, as the wireless device becomes detectable to both without requiring any modification to the installed hardware or software.

According to an embodiment the first beacon signal resembles the wireless mobile phone signal, and the second beacon signal resembles the wireless base transceiver station signal.

In this way also the beacon signals containing these parameters is easily detectable by respectively the base transceiver stations and the mobile phones.

According to a further embodiment the wireless device intermittently, alternatingly and/or cyclically transmits the first beacon signal and the second beacon signal.

This allows the wireless device to be implemented in a simple and power efficient way. It is clear that sending the beacon signals intermittently is more power efficient than sending such beacon signals continuously, According to alternative embodiments, the first beacon signal and the second beacon signal could also be sent simultaneously or during at least partly overlapping time periods. It is however clear that transmission power usage is further optimised when the first beacon signal and the second beacon signal are respectively transmitted at the same intermittent rate, but alternatingly. Still further alternative embodiments are possible in which the cyclic nature of the transmission of the beacon signals differs from the alternating scheme. The transmission cycle for the first beacon signal could for example be different from that of the second beacon signal, so that for example the first beacon signal is transmitted intermittently at another repetition frequency of that of the second beacon signal. According to still further embodiments during a transmission cycle the first beacon signal could be sent two times after which the second beacon signal is sent only once, or in accordance with any other suitable cyclic transmission scheme with a predetermined sequence of transmissions of the first and second beacon signal.

According to still a further embodiment the base transceiver stations comprise one or more of the following:
- a land based cellular network base transceiver station;
- a satellite based base transceiver station; and
in that the wireless device comprise one or more of the following:
- a wireless tag;
- a mobile phone.

The location determining system is especially suited for implementation within such terrestrial cellular or satellite based mobile telephone networks as the coverage of the base transceiver stations covers a wide area worldwide and the number of mobile phones in use is large, thus making the two-staged setup efficient as it would require a prohibitive amount of data, time delay, processing power and network bandwith to retrieve data from all available mobile phones on such a large scale directly, in search for the wireless device. Limiting the number of mobile phones from which the location processing module needs data by means of the first range determined by the first beacons signal detected by the base transceiver stations thus results in a more scalable and efficient system.

The use of a wireless tag as the wireless device is advantageous as it allows for decreasing the size of the wireless device, which allows it to be easily applied to any suitable item for which localisation is required. The use of a mobile phone as a wireless device, allows for also implementing the power efficient localisation system for localisation of such devices without the need to apply an additional item, such as a wireless tag as a suitable transmitter for the beacon signals is already available in such devices.

According to still a further embodiment the base transceiver station parameter comprises one or more of the following:
- a Cell Global Identification comprising:
   - a Location Area Identity comprising:
      - a Mobile Country Code configured to uniquely identify a country in which the cellular network base station operates;
      - a Mobile Network Code configured to uniquely identify a Public Land Mobile Network in which the cellular network base station operates;
      - The Location Area Code configured to identify an area assigned by a network operator of the Public Land Mobile Network;
   - a Cell Identity configured to uniquely identify a cellular network base station within the Public Land Mobile Network;
- the Cell Identity;
- the Mobile Country Code;
- the Mobile Network Code;
- the Location Area Code;
- a Base Station Identity Code, which comprises a Network Colour Code NCC configured to identify the Public Land Mobile Network PLMN and a Base Station Colour Code configured to distinguish a cellular network base stations from its neighbouring cellular network base stations.

Such base transceiver parameters and beacon parameters formatted as such base transceiver parameters are easily detectable by mobile phones, for example mobile phones functioning in a gsm like cellular network.

According to still a further embodiment the mobile phone parameter comprises one or more of the following:
- an International Mobile Subscriber Identity comprising:
   - a Mobile Country Code configured to uniquely identify a country in which the subscription of a mobile phone operates;
   - a Mobile Network Code configured to uniquely identify a Public Land Mobile Network in which the subscription of a mobile phone operates;
   - a Mobile Subscriber Identification Number configured to uniquely identify the subscription of a mobile phone within the Public Land Mobile Network;
- an International Mobile Station Equipment Identity to uniquely identify the mobile phone.

Such mobile phone parameters and beacon parameters formatted as such mobile phone parameters are easily detectable by base transceiver stations, for example base transceiver stations functioning in a gsm like cellular network.

According to still a further embodiment the location processing module is further configured to determine the first range in function of the base transceiver station parameters of the connected base transceiver stations that detected the first beacon signal.

In this way the number of mobile phones that is engaged in the second stage of the localisation can be limited to for example all mobile phones connected to the base transceiver stations that detected the first beacon signal by means of for example the Base Station Identity Code of these base transceiver stations or to all mobile phones connected to base transceiver stations of the same Mobile Network Code of the base transceiver stations that detected the first beacon signal, or any other suitable subset of mobile phones for use in the second stage of the localisation.

According to still a further embodiment the location processing module further comprises a base station locator configured to determine the geographic location of a base transceiver station in function of its base station parameter.

The geographic location could for example be directly linked to base station parameters such as the Location Area Code, the Mobile Country code, etc. or could be any other suitable parameter such as for example a GPS coordinate linked to the Base Station Identity Code, etc.

According to still a further embodiment the location processing module is further configured to determine the first range in function of the geographic location of the connected base transceiver stations that detected the first beacon signal.

In this way mobile phones in the same geographical area, which are for example connected to base transceiver stations of other network operators will also be taken into account.

According to still a further embodiment:
- the connected base transceiver stations that detected the first beacon signal are further configured to determine the signal strength and/or timing difference of the first beacon signal; and
- the location processing module is further configured to, when a plurality of connected base transceiver stations detected the first beacon signal, determine the first range in function of the signal strength and/or timing difference of the first beacon signal by means of triangulation and/or trilateration.

This allows for a refinement of the first range when a plurality of base transceiver stations are able to detect the first beacon signal.

According to still a further embodiment the location processing module is further configured to determine the second range of possible locations of the wireless device in function of the mobile phone parameters from the connected mobile phones that detected the second beacon signal.

This allows a simple determination of the second range by means of for example the location information associated with the International Mobile Subscriber Identity or the International Mobile Station Equipment Identity.

According to still a further embodiment the location processing module further comprises a mobile phone locator configured to determine the geographic location of a mobile phone in function of its mobile phone parameter.

In this way the geographic location data provided by for example a GPS module on-board the mobile phones that detected the wireless device or location data determined from other signals received by these mobile phones can be used to refine the second range.

According to still a further embodiment the location processing module is further configured to determine the second range in function of the geographic location of the connected mobile phones that detected the second beacon signal.

This allows for further refinement of the second range.

According to still a further embodiment:
- the connected mobile phones that detected the second beacon signal are further configured to determine the signal strength and/or timing difference of the second beacon signal; and
- the location processing module is further configured to, when a plurality of connected mobile phones detected the second beacon signal, determine the second range in function of the signal strength and/or timing difference of the second beacon signal by means of triangulation and/or trilateration.

This allows for refinement of the second range without the need for presence of for example a GPS module on-board the mobile phones.

According to a second aspect of the invention there is provided a location processing module for use in the wireless location determining system according to the first aspect of the invention, wherein the location processing module is configured to:
- Determine a first range of possible locations of the wireless device in function of the connected base transceiver stations that detected the first beacon signal; characterised in that
the location processing module is further configured to:
- Connect to a plurality of mobile phones present in the first range;
- Determine a second range of possible locations of the wireless device in function of the connected mobile phones that detected the second beacon signal, the second range being smaller than the first range.

According to a third aspect of the invention there is provided a method of operating a wireless location determining system according to the first aspect of the invention, wherein the method comprises the steps of:
- The wireless transmitter of the wireless device transmitting the first beacon signal comprising the first beacon parameter; and
- The location processing module:
   - Determining the first range of possible locations of the wireless device in function of the connected base transceiver stations that detected the first beacon signal;
characterised in that the method further comprises the steps of:
- The wireless transmitter of the wireless device transmitting the second beacon signal comprising the second beacon parameter; and
- The location processing module:
   - Connecting to a plurality of mobile phones present in the first range;
   - Determining the second range of possible locations of the wireless device in function of the connected mobile phones that detected the second beacon signal, the second range being smaller than the first range.

### Brief Description of the Drawings

Figure 1 shows an embodiment the wireless location determining system making use of a terrestrial cellular mobile phone network;
Figure 2 shows schematically the first stage of the location determining method for the embodiment of Figure 1;
Figure 3 shows schematically the second stage of the location determining method for the embodiment of Figure 1;
Figure 4 shows schematically the steps of an embodiment of the location determining method;
Figure 5 schematically shows an alternative embodiment of the wireless location determining system making use of a satellite phone network;
Figures 6-9 schematically show alternative embodiments of base transceiver station parameter and mobile phone parameters.

### Detailed Description of Embodiment(s)

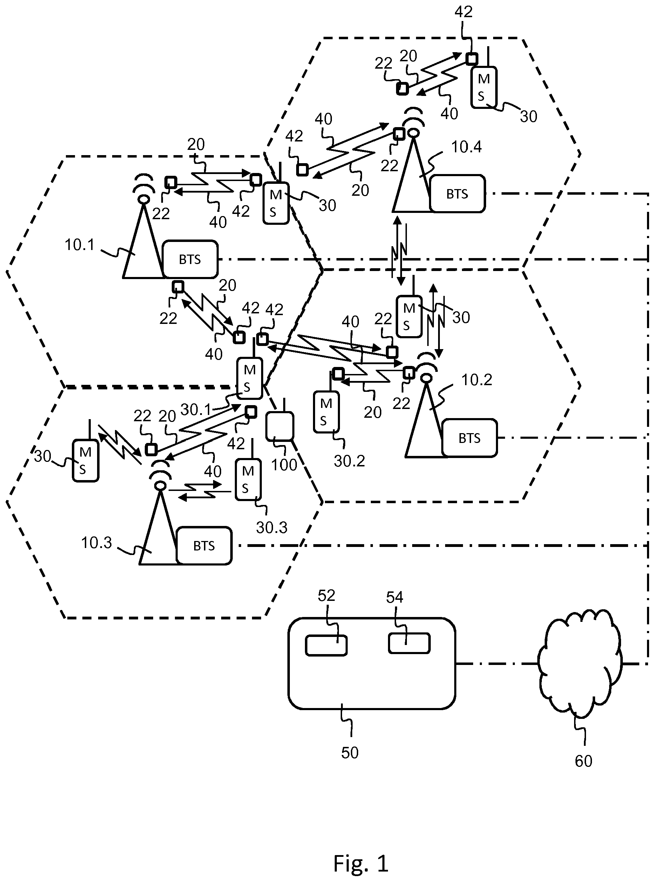

The wireless location determining system 1 shown in Figure 1 comprises a plurality of base transceiver stations 10, such as for terrestrial base transceiver stations 10.1-10.4 of a Public Land Mobile Phone network in the form of a cellular mobile phone network. Examples of such cellular mobile phone networks are for example a GSM network, 3G, 4G or other similar systems. Such cellular mobile phone networks comprise a plurality of base transceiver stations 10, of which four are schematically shown in Figure 1. A cellular network or mobile network is a wireless network distributed over land areas called cells, each served by at least one fixed-location base transceiver station 10, also known as a cell site or base station. In a cellular network, each cell uses a different set of frequencies from neighbouring cells, to avoid interference and provide guaranteed bandwidth within each cell. When joined together these cells provide radio coverage over a wide geographic area. This enables a large number of portable transceivers in the form of mobile phones 30 to communicate via a wireless link with these base transceiver stations 10.1-10.4.

Each of these base transceiver stations 10.1-10.4, as shown, transmit wireless base transceiver station signals 20 to the mobile phones 30. These base transceiver station signals 20 comprise a base transceiver station parameter 22. Such a base transceiver station parameter 22 enables a mobile phone 30 to establish a connection with the base transceiver station 10 to identify the correct base transceiver station 10 and establish a wireless communication link. The base transceiver station 10 on its end receives wireless mobile phone signals 40 transmitted by the mobile phone 30. These mobile phone signals 40 comprise mobile phone parameters 42 that enable identification of the mobile phones 30 for enabling the setup of the wireless communication link with the base transceiver station 10. As shown in Figure 1 the mobile phones 30 on their end thus transmit these wireless mobile phone signals 40 and receive the wireless base transceiver station signals 20.

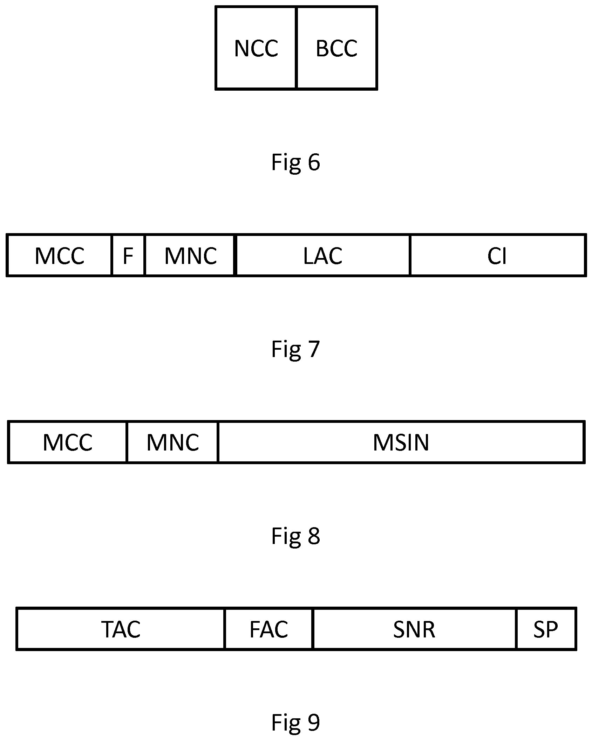

According to the embodiment of Figure 1, the base transceiver station parameter 22 broadcasted by each of the base transceiver stations 10.1-10.4 comprises for example a Base Station Identity Code or BSIC, which comprises a Network Colour Code or NCC configured to identify the Public Land Mobile Network or PLMN and a Base Station Colour Code or BSCC configured to distinguish a cellular network base station 10 from its neighbouring cellular network base stations 10 as defined in the GSM standard and for example published in "GSM Networks: Protocols, Terminology, and Implementation", Gunnar Heine, 1998, ISBN 0-89006-471-7 and shown in Figure 6. Each mobile phone 30 within reach of the base station 10 will receive this base transceiver station parameter 22 and will in this way be able to distinguish a base transceiver station 10 from base transceiver stations 10 of neighbouring cells or of other network operators. It is clear that further alternative base transceiver station parameters are possible such as for example a Cell Global Identification or CGI as shown in Figure 7 as for example known from the GSM standard. Such a CGI, as shown comprises a Location Area Identity or LAI uniquely identifying a specific area of a Public Land Mobile Network in which the base transceiver station operates and a Cell Identity or CI which uniquely identifies the base transceiver station within that specific area. The LAI comprises as shown in Figure 7 a Mobile Country Code or MCC, a Mobile Network Code or MNC and a Location Area Code or LAC. The Mobile Country Code uniquely identifies a country in which the base transceiver station 10 operates. The Mobile Network Code uniquely identifies a Public Land Mobile Network in which the base transceiver station 10 operates. The Location Area Code identifies an area assigned by the network operator of the Public Land Mobile Network. In this way the LAI together with the Cell Identity are able to uniquely identify a base transceiver station 10 within the Public Land Mobile Network.

Although the examples of base transceiver station parameters 22 given above enable a unique identification of a base transceiver 10 by a mobile phone 30, other base transceiver station parameters 22, which lack this capability, such as for example the Mobile Network Code alone, which merely provides an identification for the network operator are regularly broadcasted by the base transceiver stations 10 by means of base transceiver station signals 20 that are received and monitored in particular by all mobile phones 30 within a suitable range for reception of these signals, as the mobile phones 30 are normally configured to connect to base transceiver stations of a predetermined network operator to which they hold a subscription. It is clear that, according to alternative embodiments, other such base transceiver station parameters 22 could be broadcasted and monitored by the mobile phones 30 such as for example the Cell Identity, the Mobile Country Code, the Location Area Code, etc.

According to the embodiment shown in Figure 1, the mobile phone parameter 42 broadcasted by the mobile phones 30 by means of their mobile phone signal 40 comprises for example an International Mobile Subscriber Identity or IMSI such as for example defined in the GSM standard and shown in Figure 8. As shown such an IMSI comprises a Mobile Country Code or MCC, a Mobile Network Code or MNC and a Mobile Subscriber Identification Number or MSIN. The Mobile Country Code uniquely identifies a country in which the subscription of a mobile phone 30 operates. The Mobile Network Code uniquely identifies the Public Land Mobile Network and associated network operator in which the subscription of a mobile phone 30 operates. The Mobile Subscriber Identification Number uniquely identifies the subscription of a mobile phone 30 within that Public Land Mobile Network. In this way each base transceiver station 10 receiving the mobile phone signal 40 broadcasted by the mobile phones 30 within its reach is able to uniquely identify the mobile phone by means of a unique identification of its associated subscription by the IMSI.

It is clear that alternative mobile phone parameters 42 are available for broadcast by the mobile phones 30, such as for example an International Mobile Station Equipment Identity or IMEI to uniquely identify the mobile phone 30 as shown in Figure 9 as for example known from the GSM standard. The IMEI comprises as shown a 24-bit-long type approval code or TAC that is assigned to any mobile equipment before it can be brought into service after undergoing a test to show that it complies with safety regulations and functionality requirements. Further the IMEI comprises an 8-bit-long final assembly code or FAC, which identifies the manufacturing facility. Finally there is a 24-bit-long serial number or SNR and a spare field SP, currently not used. Base transceiver stations 10 receiving mobile phone signals 40 broadcasted by mobile phones 30 comprising such an IMEI are thus able to uniquely identify these mobile phones 30.

It is also clear that although the mobile phone parameters 42 broadcasted by the mobile phones 30 for reception by the base transceiver stations 10 within reach as described above are enable to uniquely identify these mobile phones 30, alternative mobile phone parameters 42 could be monitored by the base transceiver stations 10 that lack this capability. For example, the base transceiver station 10 could be set up to monitor the Mobile Network Code alone, that is only able to identify the Public Land Mobile Network in which the subscription of a mobile phone 30 operates. Monitoring the MNC broadcasted by the mobile phones 30 within reach of the base transceiver station 10 enables the base transceiver stations 10 to establish a connection only with the mobile phones 30 of which the MNC corresponds to those for which the network operator of that base transceiver station is willing to provide communication services.

As further shown in Figure 1, the location processing module 50 is connected to the base transceiver stations 10 and the mobile phones 30 by means of a communication network 60. This communication network 60 could be any suitable network comprising suitable wired or wireless network communication links, such as for example the mobile phone network, the internet, etc., that enables reception of data from the base transceiver stations 10 and the mobile phones 30. This location processing module 50 could for example be a suitable computing system with a suitable network connection for the communication network 60. It is further clear that location processing module 50 should not necessarily be implemented as a standalone computing system, but could equally be formed by means of a suitably connected distributed computing system and could for example even be partly comprised within the mobile phone 30 or the base transceiver station 10.

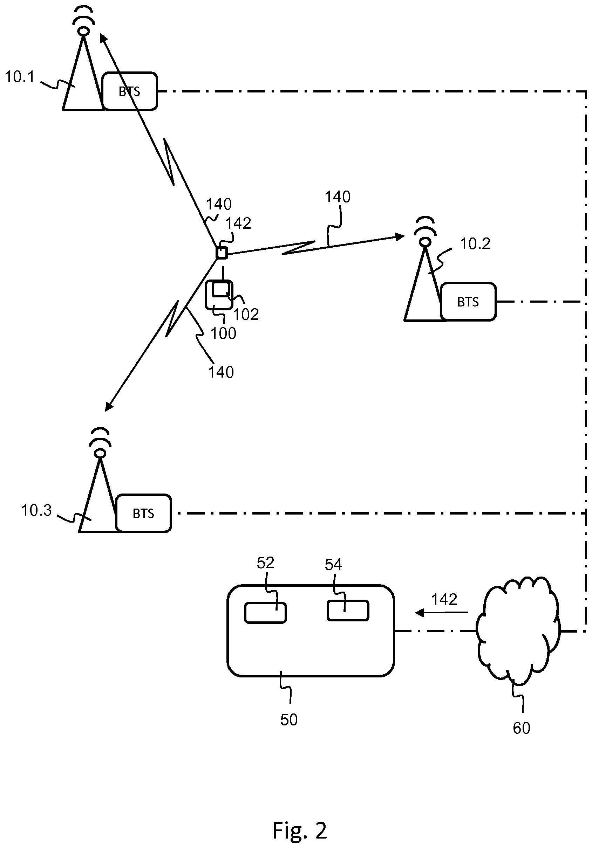

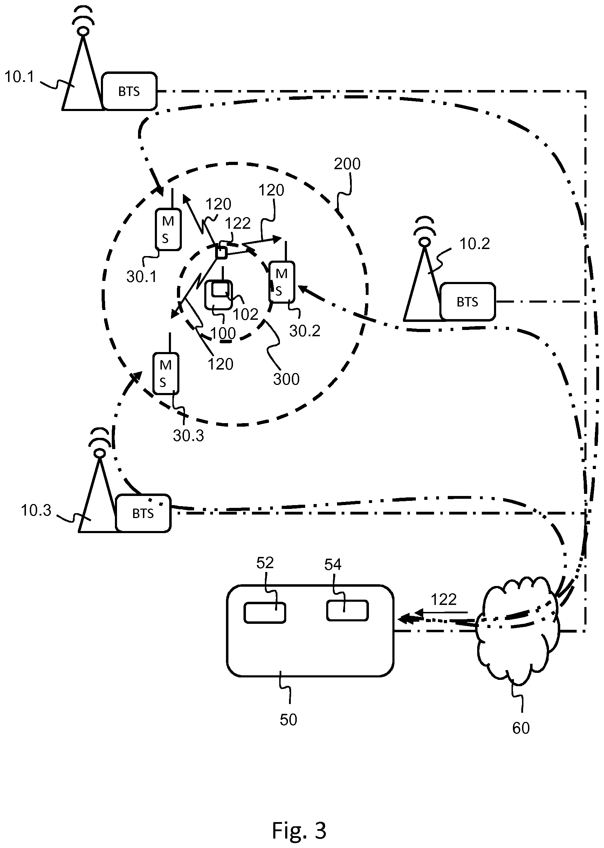

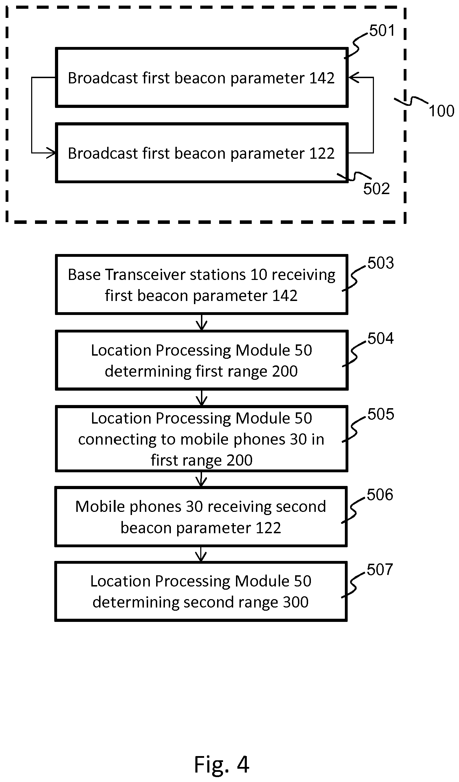

Further also a wireless device 100, preferably in the form of a wireless tag 100, is shown in Figure 1. As shown in more detail in Figure 2, this wireless tag 100 comprises a wireless transmitter 102 that transmits a first beacon signal 140. This first beacon signal 140, as shown in Figure 2, comprises a first beacon parameter 142 which is formatted as a mobile phone parameter 42 and preferably resembles the wireless mobile phone signal 40 generated by the mobile phones 30. In this way the base transceiver stations 10.1-10.3 within reach of the wireless tag 100 will receive this first beacon parameter 142 and process it as if it was a mobile phone parameter 42 broadcasted by a mobile phone signal 40 broadcasted by a mobile phone 30. This means for example that when the first beacon parameter 142 resembles an MNC as broadcasted by a mobile phone 30 the base transceiver stations 10.1 - 10.3 receiving this first beacon parameter 142 will process it as described above with reference to the MNC as a mobile phone parameter 42 and are thus able to provide the received MNC formatted first beacon parameter 142 to the location processing module 50 via the communication network 60. This corresponds to steps 501 and 503 as shown in Figure 4. Subsequently at step 504 of the embodiment of Figure 4 the location processing module 50 will determine a first range 200 of possible locations of the wireless tag 100 in function of the connected base transceiver stations 10 that detected the first beacon signal 140. In the example explained with reference to Figure 2 where the base transceiver stations 10.1 - 10.3 detected the first beacon parameter 142 broadcasted by the wireless tag 100, this first range 200 could be determined according to a simple embodiment as all mobile phones 30 of which these base transceiver stations 10.1 - 10.3 are currently receiving the mobile phone signals 40. The location processing module 50 could make use of the base station parameter 22 of these base stations 10.1 - 10.3 to enable such a determination of the first range 200, by for example establishing a connection with all mobile phones 30 that are currently receiving a base transceiver signal 20 with a base transceiver station parameter 22 identifying these specific base transceiver stations 10.1-10.3. It is clear that alternative embodiments are possible for determining the first range 200. A refinement of this first range 200 with respect to the example above is possible when connected base transceiver stations 10 that detected the first beacon signal 140 are able to determine the signal strength and/or timing difference of the first beacon signal 140. In such a case the location processing module 50 is able to determine the first range 200 in function of the signal strength and/or timing difference of the first beacon signal 140 by means of triangulation and/or trilateration, when a plurality of connected base transceiver stations 10 detected the first beacon signal 140 as schematically shown in Figure 3. It is clear that further alternative embodiments are possible for calculating the first range 200 as long as in general the location processing module 50 is able to determine the first range 200 in function of the base transceiver station parameters 22 of the connected base transceiver stations 10 that detected the first beacon signal 140. According to still a further embodiment the location processing module 50 could be able to determine the first range 200 in function of the geographic location of the connected base transceiver stations 10 that detected the first beacon signal 140. This could be enabled by means of a base station locator 52 as schematically shown in Figures 1 - 3, that is able to determine the geographic location of a base transceiver station 10 in function of its base station parameter 22. This could for example be a simple correlation table between a base station parameter 22 such as the CGI and the geographical coordinates of the base transceiver station 10. The first range 200 could then be determined in function of the geographical locations of these base transceiver stations by for example calculating a predetermined range around these geographical locations, which for example corresponds to the detection range of these base transceiver stations 10 for the first beacon signal 140.

Subsequently as shown in the embodiment of Figure 4 at step 505 the location processing module 50 connects to a plurality of mobile phones 30 present in the first range 200. As shown in Figure 3, these are for example the mobile phones referenced as 30.1-30.3. As further shown in Figure 3 the wireless transmitter 102 of the wireless tag 100 also transmits a second beacon signal 120 comprising a second beacon parameter 122 formatted as a base transceiver station parameter 22. This corresponds to step 502 shown in Figure 4. The second beacon parameter 122 could for example be formatted as a Mobile Network Code as broadcasted by a base transceiver station 10 and preferably the second beacon signal 120 resembles such a wireless base transceiver station signal 20. Of these connected mobile phones 30.1-30.3, the ones that receive this second beacon signal 120 will process the second beacon signal 120 as if it was a base transceiver station signal 20 and will thus be able to detect and provide the second beacon parameter 122 or an indication of its detection to the location processing module 50 at step 506 of Figure 4. Subsequently at step 507 the location processing module 50 will determine a second range 300, such as shown in Figure 3, of possible locations of the wireless tag 100 in function of the connected mobile phones 30 that detected this second beacon signal 120. It is clear that, when both the first beacon signal 140 and the second beacon signal 120 are broadcasted by the wireless transmitter 102 of the wireless tag with approximately the same transmission power, the detection range of the base transceiver stations 10 for the first beacon signal 140 will be larger, for example a few kilometres, than that of a mobile phone 30 for the second beacon signal 120, for example a few metres because of the inherent difference in sensitivity of their respective receivers related to their size and power constraints. Therefor the mobile phones 30.1-30.3 detecting the second beacon signal 120 are located with a higher certainty more closely to the wireless tag 100 than the base transceiver stations 10.1-10.3 detecting the first beacon signal 140. It is clear that this will thus result in the second range 300 being smaller than the first range 200.

According to the embodiment shown in Figure 4, the wireless tag 100 intermittently, alternatingly and cyclically transmits the first beacon signal 140 and the second beacon signal 120. This thus means that such a wireless tag 100 preferably only needs the wireless transmitter 104 that is configured to perform such a unidirectional beaconing function and does not require any more complicated and more power intensive hardware or software functionality for establishing a two way communication channel. Although the wireless tag 100 comprises a wireless transmitter 102 and can thus be classified as an active wireless tag 100 the power usage can thus remain extremely low, when compared to for example mobile phones 30 and can function for years on a small size battery. Additionally the wireless tag 100 itself can be miniaturised as there is only a strict minimum of hardware components which allows for wireless tags 100 that for example can be easily attached to items or can be implanted in pets or animals for tracking.

It is clear that sending the beacon signals intermittently is more power efficient than sending it continuously, It is further clear to alternative embodiments the first beacon signal and the second beacon signal could also be sent simultaneously or during at least partly overlapping time periods. According to still further alternative embodiments, the first and second beacon signals are transmitted for example at the same intermittent rate, but alternatingly instead of simultaneously. Still further alternative embodiments are possible in which the cyclic nature of the transmission of the beacon signals differs from such an alternating scheme. The transmission cycle for the first beacon signal could for example be different from that of the second beacon signal, so that for example the first beacon signal is transmitted intermittently at another repetition frequency of that of the second beacon signal. Or according to still further embodiments during an a transmission cycle the first beacon signal could be sent two times after which the second beacon signal is sent only once, or any other suitable cyclic transmission scheme with a predetermined sequence of transmissions of the first and second beacon signal.

It is further clear that although in the embodiments described above the wireless device 100 is preferably embodied as a wireless tag 100, alternative embodiments are possible for the wireless device 100. One particular advantageous alternative is for example a wireless mobile phone or similar device comprising a suitable mobile phone network interface such as for example a tablet computer, laptop, etc., that is capable of using the transmitter of its mobile phone network interface to send the first and second beacon signals. This would for example enable the localisation of for example a lost or stolen mobile phone or the user of that equipment.

According to one embodiment the location processing module 50 comprises a mobile phone locator 54 that is able to determine the geographic location of a mobile phone 30 in function of its mobile phone parameter 42. This is for example realised by means of a GPS module integrated in the mobile phone 30 that is able to provide the geographical coordinates of the mobile phone 30 in association with a mobile phone parameter 42 identifying the mobile phone, such as for example the IMSI or IMEI. The location processing module 50 is then able to determine the second range 300 of possible locations of the wireless tag 100 in function of such mobile phone parameters 42 from the connected mobile phones 30 that detected the second beacon signal 120, for example as predetermined detection range around the geographical coordinates of these mobile phones 30. It is clear that alternative possibilities exist for determining the geographical location of these mobile phones 30. For example when the geographical location of the base transceiver stations is known from the base station locator 52, the geographical location of a mobile phones 30 can for example be determined by triangulation or trilateration in function of the signal strength or timing difference of the mobile phone signal 40 generated by this mobile phone 30 and received at a plurality of different base transceiver stations 10. Alternatively the geographic location of a mobile phone 30 can also be determined by means of triangulation or trilateration of the signal strength or timing difference of different base transceiver signals 20 received at this mobile phone 30. It is clear that still further alternative embodiments are possible for determining the second range 300 as long as in general the location processing module 50 is able to determine the second range 300 of possible locations of the wireless tag 100 in function of the mobile phone parameters 42 from the connected mobile phones 30 that detected the second beacon signal 120.

According to still a further embodiment, as shown in Figure 3, the location processing module 50 is able to further refine the second range 300, when a plurality of connected mobile phones 30 detected the second beacon signal 120 and are able to determine the signal strength and/or timing difference of the second beacon signal 120, as then the second range 300 can be determined in function of the signal strength and/or timing difference of the second beacon signal 120 by means of triangulation and/or trilateration.

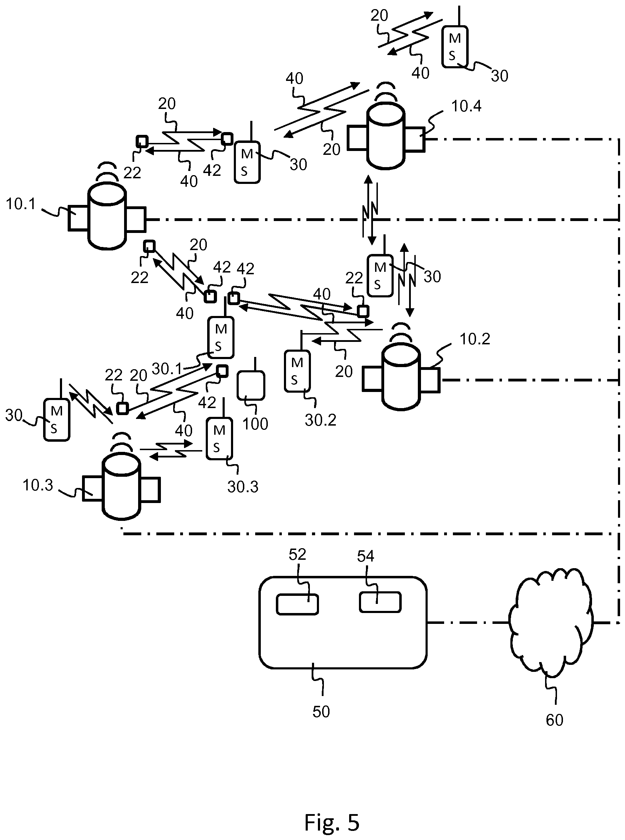

It is clear that although the embodiments above have been described with reference to land based wireless base transceiver stations 10, alternative embodiments are possible such as for example the embodiment shown in Figure 5 comprising satellite based base transceiver station 10. The operation of the satellite base transceiver stations 10 is similar as explained for the terrestrial base transceiver stations 10 as explained with reference to the previous embodiments, the only difference is that now the location processing module is connected by means of a suitable network connection to the satellite base transceiver stations 10 instead of to terrestrial base transceiver stations 10. The other components of the wireless location determining system 1 operate similarly as described above and are designated with the same reference signs, the only difference being that the respective sent and received wireless signals are suitable for satellite based base transceiver stations 10 and corresponding mobile phones 30.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wireless location determining system (1) comprising:
- A plurality of base transceiver stations (10), each configured to transmit wireless base transceiver station signals (20) comprising a base transceiver station parameter (22) and to receive wireless mobile phone signals (40) each comprising a mobile phone parameter (42) from a mobile phone (30);
- A plurality of mobile phones (30), each configured to transmit the wireless mobile phone signals (40) and to receive the wireless base transceiver station signals (20);
- A location processing module (50) connected to the base transceiver stations (10) and the mobile phones (30) by means of a communication network (60); and
- A wireless device (100); wherein
- The wireless device (100) comprises a first beacon parameter (142) formatted as a mobile phone parameter (42), and a wireless transmitter (102) that is configured to transmit a first beacon signal (140) comprising the first beacon parameter (142); and - The location processing module (50) is configured to:
- Determine a first range (200) of possible locations of the wireless device (100) in function of the connected base transceiver stations (10) that detected the first beacon signal (140);
**CHARACTERISED IN THAT**
- The wireless device (100) further comprises a second beacon parameter (122) formatted as a base transceiver station parameter (22), and the wireless transmitter (102) of the wireless device (100) is further configured to transmit a second beacon signal (120) comprising the second beacon parameter (122); and 25 - The location processing module (50) is further configured to:
- Connect to a plurality of mobile phones (30) present in the first range (200);
- Determine a second range (300) of possible locations of the wireless device (100) in function of the connected mobile phones (30) that detected the second beacon signal (120), the second range (300) being smaller than the first range (200).

2. A wireless location determining system according to claim 1, **characterised in that** the first beacon signal (140) resembles the wireless mobile phone signal (40), and the second beacon signal (120) resembles the wireless base transceiver station signal (20).

3. A wireless location determining system according to claim 1 or 2, **characterised in that** the wireless device (100) intermittently, alternatingly and/or cyclically transmits the first beacon signal (140) and the second beacon signal (120).

4. A wireless location determining system according to any of the preceding claims, **characterised in that** the base transceiver stations (10) comprise one or more of the following:
- a land based cellular network base transceiver station;
- a satellite based base transceiver station; and
**in that** the wireless device (100) comprise one or more of the following:
- a wireless tag;
- a mobile phone.

5. A wireless location determining system according to any of the preceding claims, **characterised in that** the base transceiver station parameter (22) comprises one or more of the following:
- a Cell Global Identification comprising:
- a Location Area Identity comprising:
- a Mobile Country Code configured to uniquely identify a country in which the base transceiver station (10) operates;
- a Mobile Network Code configured to uniquely identify a Public Land Mobile Network in which the base transceiver station (10) operates;
- The Location Area Code configured to identify an area assigned by a network operator of the Public Land Mobile Network;
- a Cell Identity configured to uniquely identify a cellular network base station (10) within the Public Land Mobile Network;
- the Cell Identity;
- the Mobile Country Code;
- the Mobile Network Code;
- the Location Area Code;
- a Base Station Identity Code, which comprises a Network Colour Code NCC configured to identify the Public Land Mobile Network PLMN and a Base Station Colour Code configured to distinguish a cellular network base stations (10) from its neighbouring cellular network base stations (10).

6. A wireless location determining system according to any of the preceding claims, **characterised in that** the mobile phone parameter (42) comprises one or more of the following:
- an International Mobile Subscriber Identity comprising:
- a Mobile Country Code configured to uniquely identify a country in which the subscription of a mobile phone (30) operates;
- a Mobile Network Code configured to uniquely identify a Public Land Mobile Network in which the subscription of a mobile phone (30) operates;
- a Mobile Subscriber Identification Number configured to uniquely identify the subscription of a mobile phone (30) within the Public Land Mobile Network;
- an International Mobile Station Equipment Identity to uniquely identify the mobile phone (30);
- a Mobile Network Code configured to uniquely identify a Public Land Mobile Network in which the subscription of a mobile phone (30) operates.

7. A wireless location determining system according to any of the preceding claims, **characterised in that** the location processing module (50) is further configured to determine the first range (200) in function of the base transceiver station parameters (22) of the connected base transceiver stations (10) that detected the first beacon signal (140).

8. A wireless location determining system according to any of the preceding claims, **characterised in that** the location processing module (50) further comprises a base station locator (52) configured to determine the geographic location of a base transceiver station (10) in function of its base station parameter (22);
and **in that** the location processing module (50) is further configured to determine the first range (200) in function of the geographic location of the connected base transceiver stations (10) that detected the first beacon signal (140).

9. A wireless location determining system according to any of the preceding claims, **characterised in that**:
- the connected base transceiver stations (10) that detected the first beacon signal (140) are further configured to determine the signal strength and/or timing difference of the first beacon signal (140); and
- the location processing module (50) is further configured to, when a plurality of connected base transceiver stations (10) detected the first beacon signal (140), determine the first range (200) in function of the signal strength and/or timing difference of the first beacon signal (140) by means of triangulation and/or trilateration.

10. A wireless location determining system according to any of the preceding claims, **characterised in that** the location processing module (50) is further configured to determine the second range (300) of possible locations of the wireless device (100) in function of the mobile phone parameters (42) from the connected mobile phones (30) that detected the second beacon signal (120);
and **in that** the location processing module (50) further comprises a mobile phone locator (54) configured to determine the geographic location of a mobile phone (30) in function of its mobile phone parameter (22).

11. A wireless location determining system according to claim 10, **characterised in that** the location processing module (50) is further configured to determine the second range (300) in function of the geographic location of the connected mobile phones (10) that detected the second beacon signal (120).

12. A wireless location determining system according to any of the preceding claims, **characterised in that**:
- the connected mobile phones (30) that detected the second beacon signal (120) are further configured to determine the signal strength and/or timing difference of the second beacon signal (120); and
- the location processing module (50) is further configured to, when a plurality of connected mobile phones (30) detected the second beacon signal (120), determine the second range (300) in function of the signal strength and/or timing difference of the second beacon signal (120) by means of triangulation and/or trilateration.

13. A location processing module for use in the wireless location determining system according to any of the claims 1 to 12, wherein the location processing module (50) is configured to:
- Determine a first range (200) of possible locations of the wireless device (100) in function of the connected base transceiver stations (10) that detected the first beacon signal (140),
**characterised in that**
the location processing module (50) is further configured to:
- Connect to a plurality of mobile phones (30) present in the first range (200);
- Determine a second range (300) of possible locations of the wireless device (100) in function of the connected mobile phones (30) that detected the second beacon signal (120), the second range (300) being smaller than the first range (200).

14. A method of operating a wireless location determining system according to any of the claims 1 to 12, wherein the method comprises the steps of:
- The wireless transmitter (102) of the wireless device (100) transmitting the first beacon signal (140) comprising the first beacon parameter (142); and
- The location processing module (50):
- Determining the first range (200) of possible locations of the wireless device (100) in function of the connected base transceiver stations (10) that detected the first beacon signal (140),
**characterised in that** the method further comprises the steps of:
- The wireless transmitter (102) of the wireless device (100) transmitting the second beacon signal (120) comprising the second beacon parameter (122); and
- The location processing module (50):
- Connecting to a plurality of mobile phones (30) present in the first range (200);
- Determining the second range (300) of possible locations of the wireless device (100) in function of the connected mobile phones (30) that detected the second beacon signal (120), the second range (300) being smaller than the first range (200).

## Patentansprüche

1. Ein drahtloses Positionsbestimmungssystem (1), umfassend:
- Eine Vielzahl von Basisübertragungsstationen (10), die jeweils so konfiguriert sind, um drahtlose Basisübertragungsstationssignale (20) umfassend einen Basisübertragungsstationsparameter (22) zu übertragen, und die drahtlose Basisübertragungsstationssignale (40) zu empfangen, jeweils umfassend einen Mobiltelefonparameter (42) von einem Mobiltelefon (30);
- Eine Vielzahl von Mobiltelefonen (30), die jeweils konfiguriert sind, um die drahtlose Mobiltelefonsignale (40) zu übertragen und die drahtlose Basisübertragungsstationssignale (20) zu empfangen;
- Ein mit den Basisübertragungsstationen (10) und den Mobiltelefonen (30) mittels eines Kommunikationsnetzes (60) verbundenes Positionsverarbeitungsmodul (50); und - Eine drahtlose Vorrichtung (100);
wobei
- Die drahtlose Vorrichtung (100) einen ersten Beacon-Parameter (142), der als Mobiltelefonparameter (42) formatiert ist, und einen drahtlosen Sender (102) umfasst, der konfiguriert ist, um ein erstes Beacon-Signal (140) umfassend den ersten Beacon-Parameter (142) zu übertragen;
und - Das Positionsverarbeitungsmodul (50) ist konfiguriert zum:
- Bestimmen eines ersten Bereichs (200) möglicher Positionen der drahtlosen Vorrichtung (100) in Funktion der verbundenen Basisübertragungsstationen (10), die das erste Beacon-Signal (140) detektierten;
**DADURCH GEKENNZEICHNET, DASS**
- Die drahtlose Vorrichtung (100) ferner einen zweiten Beacon-Parameter (122) umfasst, der als Basisübertragungsstationsparameter (22) formatiert ist, und den drahtlosen Sender (102) der drahtlosen Vorrichtung (100), ferner konfiguriert ist zum Übertragen eines zweiten Beacon-Signals (120) umfassend den zweiten Beacon-Parameter (122);
und - Das Positionsverarbeitungsmodul (50) ferner konfiguriert ist zum:
- Verbinden mit einer Vielzahl von Mobiltelefonen (30), die in dem ersten Bereich (200) vorhanden sind;
- Bestimmen eines zweiten Bereichs (300) möglicher Positionen der drahtlosen Vorrichtung (100) in Funktion der verbundenen Mobiltelefone (30), die das zweite Beacon-Signal (120) detektierten, wobei der zweite Bereich (300) kleiner ist als der erste Bereich (200).

2. Ein drahtloses Positionsbestimmungssystem nach Anspruch 1, **dadurch gekennzeichnet, dass** das erste Beacon-Signal (140) dem drahtlosen Mobiltelefonsignal (40) gleicht, und das zweite Beacon-Signal (120) dem drahtlosen Basisübertragungsstationssignal (20) gleicht.

3. Ein drahtloses Positionsbestimmungssystem nach Anspruch 1 oder 2, **dadurch gekennzeichnet, dass** die drahtlose Vorrichtung (100) das erste Beacon-Signal (140) und das zweite Beacon-Signal (120) intermittierend, abwechselnd und/oder zyklisch überträgt.

4. Ein drahtloses Positionsbestimmungssystem nach einem der vorhergehenden Ansprüche, **dadurch gekennzeichnet, dass** die Basisübertragungsstationen (10) eine oder mehrere der folgenden umfassen:
- eine landgestützte zellulare Netzwerkbasisübertragungsstation;
- eine satellitengestützte Basisübertragungsstation; und
dass die drahtlose Vorrichtung (100) ein oder mehrere der folgenden umfasst:
- ein drahtloses Tag;
- ein Mobiltelefon.

5. Ein drahtloses Positionsbestimmungssystem nach einem der vorhergehenden Ansprüche, **dadurch gekennzeichnet, dass** der Basisübertragungsstationsparameter (22) ein(e) oder mehrere der folgenden umfasst:
- eine Cell Global Identity, umfassend:
- eine Location Area Identity umfassend:
- ein Mobile Country Code, der so konfiguriert ist, um ein Land, in dem die Basisübertragungsstation (10) arbeitet, eindeutig zu identifizieren;
- ein Mobilfunkcode (Mobile Network Code), der so konfiguriert ist, um ein öffentliches terrestrisches Mobilfunknetz (Public Land Mobile Network), in dem die Basisübertragungsstation (10) arbeitet, eindeutig zu identifizieren;
- Der Location Area Code, der so konfiguriert ist, um einen Bereich zu identifizieren, der von einem Netzbetreiber des öffentlichen terrestrischen Mobilfunknetzs (Public Land Mobile Network) zugewiesen wurde;
- eine Zellenidentität (Cell Identity), die so konfiguriert ist, um eine zellulare Netzwerkbasisstation (10) innerhalb des öffentlichen terrestrischen Mobilfunknetzes eindeutig zu identifizieren;
- die Zellidentität;
- den Mobile Country Code;
- den Mobilfunkcode;
- den Location Area Code;
- einen Basisstationsidentitätscode (Base Station Identity Code), der einen Network Colour Code NCC umfasst, der konfiguriert ist, um das öffentliche terrestrische Mobilfunknetz PLMN und einen Basisstationsfarbcode (Base Station Colour Code), der konfiguriert ist, um eine zellulare Netzwerkbasisstation (10) von seinen benachbarten zellularen Netzwerkbasisstationen (10) zu unterscheiden.

6. Ein drahtloses Positionsbestimmungssystem nach einem der vorhergehenden Ansprüche, **dadurch gekennzeichnet, dass** der Mobiltelefonparameter (42) ein(e) oder mehrere der folgenden umfasst:
- eine Internationale Kennung für Mobile Teilnehmer (International Mobile Subscriber Identity) umfassend:
- ein Mobile Country Code, der konfiguriert ist, um ein Land, in dem das Abonnement eines Mobiltelefons (30) arbeitet, eindeutig zu identifizieren;
- ein Mobilfunkcode, der konfiguriert ist, um ein öffentliches terrestrisches Mobilfunknetz, in dem das Abonnement eines Mobiltelefons (30) arbeitet, eindeutig zu identifizieren;
- eine Mobilfunkteilnehmer-Identifikationsnummer (Mobile Subscriber Identification Number), die konfiguriert ist, um das Abonnement eines Mobiltelefons (30) innerhalb des öffentlichen terrestrischen Mobilfunknetzes eindeutig zu identifizieren;
- eine Internationale Kennung für mobile Stationsendeinrichtungen (International Mobile Station Equipment Identity), um das Mobiltelefon(30) eindeutig zu identifizieren;
- ein Mobilfunkcode, der konfiguriert ist, um ein öffentliches terrestrisches Mobilfunknetz, in dem das Abonnement eines Mobiltelefons (30) arbeitet, eindeutig zu identifizieren.

7. Ein drahtloses Positionsbestimmungssystem nach einem der vorhergehenden Ansprüche, **dadurch gekennzeichnet, dass** das Positionsverarbeitungsmodul (50) ferner dazu konfiguriert ist, um den ersten Bereich (200) in Funktion der Basisübertragungsstationsparameter (22) der verbundenen Basisübertragungsstationen (10), die das erste Beacon-Signal (140) detektierten, zu bestimmen.

8. Ein drahtloses Positionsbestimmungssystem nach einem der vorhergehenden Ansprüche, **dadurch gekennzeichnet, dass** das Positionsverarbeitungsmodul (50) ferner einen Basisstation-Locator (52) umfasst, der konfiguriert ist, um die geographische Lage einer Basisübertragungsstation (10) in Funktion seines Basisstationsparameters (22) zu bestimmen;
und dass das Positionsverarbeitungsmodul (50) ferner konfiguriert ist, um den ersten Bereich (200) in Funktion der geographischen Lage der verbundenen Basisübertragungsstationen (10), die das erste Beacon-Signal (140) detektierten,
zu bestimmen.

9. Ein drahtloses Positionsbestimmungssystem nach einem der vorhergehenden Ansprüche, **dadurch gekennzeichnet, dass**:
- die verbundenen Basisübertragungsstationen (10), die das erste Beacon-Signal (140) detektierten, ferner konfiguriert sind, um die Signalstärke und/oder Zeitdifferenz des ersten Beacon-Signals (140) zu bestimmen; und
- das Positionsverarbeitungsmodul (50) ferner konfiguriert ist, um, wenn eine Mehrzahl von verbundenen Basisübertragungsstationen (10) das erste Beacon-Signal (140) detektierten, den ersten Bereich (200) in Funktion der Signalstärke und/oder Zeitdifferenz des ersten Beacon-Signals (140) mittels Triangulation und/oder Trilateration zu bestimmen.

10. Ein drahtloses Positionsbestimmungssystem nach einem der vorhergehenden Ansprüche, **dadurch gekennzeichnet, dass** das Positionsverarbeitungsmodul (50) ferner konfiguriert ist, um den zweiten Bereich (300) möglicher Positionen der drahtlosen Vorrichtung (100) zu bestimmen in Funktion der Mobiltelefonparameter (42) von den verbundenen Mobiltelefonen (30), die das zweite Beacon-Signal (120) detektierten;
und dass das Positionsverarbeitungsmodul (50) ferner einen Mobiltelefon- Locator (54) umfasst, der konfiguriert ist, um die geographische Lage eines Mobiltelefons (30) in Funktion seines Mobiltelefonparameters (22) zu bestimmen.

11. Ein drahtloses Positionsbestimmungssystem nach Anspruch 10, **dadurch gekennzeichnet, dass** das Positionsverarbeitungsmodul (50) ferner konfiguriert ist, um den zweiten Bereich (300) in Funktion der geographischen Lage der verbundenen Mobiltelefone (10), die das zweite Beacon-Signal (120) detektierten, zu bestimmen.

12. Ein drahtloses Positionsbestimmungssystem nach einem der vorhergehenden Ansprüche, **dadurch gekennzeichnet, dass**:
- die verbundenen Mobiltelefone (30), die das zweite Beacon-Signal (120) detektierten, ferner konfiguriert sind, um die Signalstärke und/oder Zeitdifferenz des zweiten Beacon-Signals (120) zu bestimmen; und
- das Positionsverarbeitungsmodul (50) ferner konfiguriert ist um, wenn eine Vielzahl von verbundenen Mobiltelefonen (30) das zweite Beacon-Signal (120) detektierten, den zweiten Bereich (300) in Funktion der Signalstärke und/oder Zeitdifferenz des zweiten Beacon-Signals (120) mittels Triangulation und/oder Trilateration zu bestimmen.

13. Ein Positionsverarbeitungsmodul zur Verwendung in dem drahtlosen Positionsbestimmungssystem nach einem der Ansprüche 1 bis 12, wobei das Positionsverarbeitungsmodul (50) konfiguriert ist zum:
- Bestimmen eines ersten Bereichs (200) möglicher Positionen der drahtlosen Vorrichtung (100) in Funktion der verbundenen Basisübertragungsstationen (10), die das erste Beacon-Signal (140) detektierten,
**dadurch gekennzeichnet, dass**
das Positionsverarbeitungsmodul (50) ferner konfiguriert ist zum:
- Verbinden mit einer Vielzahl von Mobiltelefonen (30), die in dem ersten Bereich (200) vorhanden sind;
- Bestimmen eines zweiten Bereichs (300) möglicher Positionen der drahtlosen Vorrichtung (100) in Funktion der verbundenen Mobiltelefone (30), die das zweite Beacon-Signal (120) detektierten, wobei der zweite Bereich (300) kleiner ist als der erste Bereich (200).

14. Ein Verfahren zum Betrieb eines drahtlosen Positionsbestimmungssystems nach einem der Ansprüche 1 bis 12, wobei das Verfahren die folgenden Schritte umfasst:
- der drahtlose Sender (102) der drahtlosen Vorrichtung (100) überträgt das erste Beacon-Signal (140), umfassend den ersten Beacon-Parameter (142); und
- Das Positionsverarbeitungsmodul (50):
- bestimmt den ersten Bereich (200) möglicher Positionen der drahtlosen Vorrichtung (100) in Funktion der verbundenen Basisübertragungsstationen (10), die das erste Beacon-Signal (140) detektierten,
**dadurch gekennzeichnet, dass** das Verfahren ferner die folgenden Schritte umfasst:
- Der drahtlose Sender (102) der drahtlosen Vorrichtung (100) überträgt das zweite Beacon-Signal (120), umfassend den zweiten Beacon-Parameter (122); und
- Das Positionsverarbeitungsmodul (50):
- verbindet mit einer Mehrzahl von Mobiltelefonen (30), die in dem ersten Bereich (200) vorhanden sind;
- bestimmt den zweiten Bereich (300) möglicher Positionen der drahtlosen Vorrichtung (100) in Funktion der verbundenen Mobiltelefone (30), die das zweite Beacon-Signal (120) detektierten, wobei der zweite Bereich (300) kleiner ist als der erste Bereich (200).

## Revendications

1. Un système de détermination de localisation sans fil (1) comprenant:
- Une pluralité de stations d'émetteur-récepteur de base (10), chacune configurée pour transmettre des signaux de station d'émetteur-récepteur de base sans fil (20) comprenant un paramètre de station d'émetteur-récepteur de base (22) et pour recevoir des signaux de téléphone mobile sans fil (40) chacun comprenant un paramètre de téléphone mobile (42) provenant d'un téléphone mobile (30);
- Une pluralité de téléphones mobiles (30), chacun configuré pour transmettre les signaux de téléphone mobile sans fil (40) et pour recevoir les signaux de station d'émetteur-récepteur de base sans fil (20);
- Un module de traitement de localisation (50) relié aux stations d'émetteur-récepteur de base (10) et aux téléphones mobiles (30) au moyen d'un réseau de communication (60);
et - Un dispositif sans fil (100);
dans lequel
- Le dispositif sans fil (100) comprend un premier paramètre de balise (142) formaté en tant que paramètre de téléphone mobile (42), et un émetteur sans fil (102) qui est configuré pour transmettre un premier signal de balise (140) comprenant le premier paramètre de balise (142);
et - Le module de traitement de localisation (50) est configuré pour:
- Déterminer une première plage (200) d'emplacements possibles du dispositif sans fil (100) en fonction des stations d'émetteurs-récepteurs de base reliées (10) qui ont détecté le premier signal de balise (140);
CARACTERI SE EN CE QUE
- Le dispositif sans fil (100) comprend en outre un second paramètre de balise (122) formaté en tant que paramètre de station d'émetteur-récepteur de base (22), et l'émetteur sans fil (102) du dispositif sans fil (100) est configuré en outre pour transmettre un second signal de balise (120) comprenant le second paramètre de balise (122);
et - Le module de traitement de localisation (50) est configuré en outre pour:
- Se connecter à une pluralité de téléphones mobiles (30) présents dans la première plage (200);
- Déterminer une seconde plage (300) d'emplacements possibles du dispositif sans fil (100) en fonction des téléphones mobiles reliés (30) qui ont détecté le second signal de balise (120), la seconde plage (300) étant plus petite que la première plage (200).

2. Un système de détermination de localisation sans fil selon la revendication 1, **caractérisé en ce que** le premier signal de balise (140) ressemble au signal de téléphone mobile sans fil (40), et que le second signal de balise (120) ressemble au signal de station d'émetteur-récepteur de base sans fil (20).

3. Un système de détermination de localisation sans fil selon la revendication 1 ou 2, **caractérisé en ce que** le dispositif sans fil (100) transmet de façon intermittente, de façon alternante et/ou cycliquement le premier signal de balise (140) et le second signal de balise (120).

4. Un système de détermination de localisation sans fil selon l'une quelconque des revendications précédentes, **caractérisé en ce que** les stations d'émetteur-récepteur de base (10) comprennent un(e) ou plusieurs des suivants:
- une station d'émetteur-récepteur de base de réseau cellulaire terrestre;
- une station d'émetteur-récepteur de base satellite; et
**en ce que** le dispositif sans fil (100) comprend un(e) ou plusieurs des suivants:
- une étiquette sans fil;
- un téléphone mobile.

5. Un système de détermination de localisation sans fil selon l'une quelconque des revendications précédentes, **caractérisé en ce que** le paramètre de station d'émetteur-récepteur de base (22) comprend un(e) ou plusieurs des suivants:
- une identification mondiale de cellule (Cell Global Identification) comprenant:
- une identité de la zone de localisation (Location Area Identity) comprenant:
- un code de pays mobile (Mobile Country Code) configuré pour identifier de façon unique un pays dans lequel la station d'émetteur-récepteur de base (10) fonctionne;
- un code de réseau mobile (Mobile Network Code) configuré pour identifier de façon unique un réseau mobile terrestre public (Public Land Mobile Network) dans lequel la station d'émetteur-récepteur de base (10) fonctionne;
- le code de la zone de localisation (Location area code) configuré pour identifier une zone attribuée par un opérateur de réseau du réseau mobile terrestre public (Public Land Mobile Network);
- une identité de cellule (Cell Identity) configurée pour identifier de façon unique une station de base de réseau cellulaire (10) au sein du réseau mobile terrestre public;
- l'identité de cellule;
- le code de pays mobile;
- le code de réseau mobile;
- le code de la zone de localisation;
- un code d'identité de station de base (Base Station Identity Code), qui comprend un code de couleur de réseau NCC (Network Colour Code) configuré pour identifier le réseau mobile terrestre public PLMN et un code de couleur de station de base (Base Station Colour Code) configuré pour distinguer des stations de base de réseau cellulaire (10) de ses stations de base de réseau cellulaire voisines (10).

6. Un système de détermination de localisation sans fil selon l'une quelconque des revendications précédentes, **caractérisé en ce que** le paramètre de téléphone mobile (42) comprend un(e) ou plusieurs des suivants:
- une identité internationale d'abonné mobile (International Mobile subscriber Identity) comprenant:
- un code de pays mobile configuré pour identifier de manière unique un pays dans lequel l'abonnement d'un téléphone mobile (30) fonctionne;
- un code de réseau mobile configuré pour identifier de façon unique un réseau mobile terrestre public dans lequel l'abonnement d'un téléphone mobile (30) fonctionne;
- un numéro d'identification d'abonné mobile (Mobile Subscriber Identification Number) configuré pour identifier de façon unique l'abonnement d'un téléphone mobile (30) au sein du réseau mobile terrestre public;
- une identité internationale d'équipement de station mobile (International Mobile Station Equipment Identity) pour identifier de façon unique le téléphone mobile (30);
- un code de réseau mobile configuré pour identifier de manière unique un réseau mobile terrestre public dans lequel l'abonnement d'un téléphone mobile (30) fonctionne.

7. Un système de détermination de localisation sans fil selon l'une quelconque des revendications précédentes, **caractérisé en ce que** le module de traitement de localisation (50) est en outre configuré pour déterminer la première plage (200) en fonction des paramètres de station d'émetteur-récepteur de base (22) des stations d'émetteur-récepteur de base reliées (10) qui ont détecté le premier signal de balise (140).

8. Un système de détermination de localisation sans fil selon l'une quelconque des revendications précédentes, **caractérisé en ce que** le module de traitement de localisation (50) comprend en outre un localisateur de station de base (52) configuré pour déterminer la localisation géographique d'une station d'émetteur-récepteur de base (10) en fonction de son paramètre de station de base (22);
et **en ce que** le module de traitement de localisation (50) est en outre configuré pour déterminer la première plage (200) en fonction de la localisation géographique des stations d'émetteur-récepteur de base reliées (10) qui ont détecté le premier signal de balise (140).

9. Un système de détermination de localisation sans fil selon l'une quelconque des revendications précédentes, **caractérisé en ce que**:
- les stations d'émetteurs-récepteurs de base reliées (10) qui ont détecté le premier signal de balise (140) sont configurées en outre pour déterminer la force du signal et/ou la différence temporelle du premier signal de balise (140); et
- le module de traitement de localisation (50) est configuré en outre pour, lorsqu'une pluralité de stations d'émetteurs-récepteurs de base reliées (10) ont détecté le premier signal de balise (140), déterminer la première plage (200) en fonction de la force du signal et/ou la différence temporelle du premier signal de balise (140) au moyen de triangulation et/ou de trilatération.

10. Un système de détermination de localisation sans fil selon l'une quelconque des revendications précédentes, **caractérisé en ce que** le module de traitement de localisation (50) est configuré en outre pour déterminer la seconde plage (300) d'emplacements possibles du dispositif sans fil (100) en fonction des paramètres de téléphone mobile (42) provenant des téléphones mobiles reliés (30) qui ont détecté le second signal de balise (120);
et **en ce que** le module de traitement de localisation (50) comprend en outre un localisateur de téléphone mobile (54) configuré pour déterminer la localisation géographique d'un téléphone mobile (30) en fonction de son paramètre de téléphone mobile (22).

11. Un système de détermination de localisation sans fil selon la revendication 10, **caractérisé en ce que** le module de traitement de localisation (50) est configuré en outre pour déterminer la seconde plage (300) en fonction de la localisation géographique des téléphones mobiles reliés (10) qui ont détecté le second signal de balise (120).

12. Un système de détermination de localisation sans fil selon l'une quelconque des revendications précédentes, **caractérisé en ce que**:
- les téléphones mobiles reliés (30) qui ont détecté le second signal de balise (120) sont configurés en outre pour déterminer la force du signal et/ou la différence temporelle du second signal de balise (120); et
- le module de traitement de localisation (50) est configuré en outre pour, lorsqu'une pluralité de téléphones mobiles reliés (10) a détecté le second signal de balise (120), déterminer la seconde plage (300) en fonction de la force du signal et/ou la différence temporelle du second signal de balise (120) au moyen de triangulation et/ou trilatération.

13. Un module de traitement de localisation pour l'utilisation dans le système de détermination de localisation sans fil selon l'une quelconque des revendications 1 à 12, dans lequel le module de traitement de localisation (50) est configuré pour:
- Déterminer une première plage (200) d'emplacements possibles du dispositif sans fil (100) en fonction des stations d'émetteurs-récepteurs de base reliées (10) qui ont détecté le premier signal de balise (140),
**caractérisé en ce que**
le module de traitement de localisation (50) est configuré en outre pour:
- Se connecter à une pluralité de téléphones mobiles (30) présents dans la première plage (200);
- Déterminer une seconde plage (300) d'emplacements possibles du dispositif sans fil (100) en fonction des téléphones mobiles reliés (30) qui ont détecté le second signal de balise (120), la seconde plage (300) étant plus petite que la première plage (200).

14. Un procédé pour le fonctionnement d'un système de détermination de localisation sans fil selon l'une quelconque des revendications 1 à 12, dans lequel le procédé comprend les étapes de:
- l'émetteur sans fil (102) du dispositif sans fil (100) transmettant le premier signal de balise (140) comprenant le premier paramètre de balise (142); et
- Le module de traitement de localisation (50):
- Déterminant la première plage (200) d'emplacements possibles du dispositif sans fil (100) en fonction des stations d'émetteurs-récepteurs de base reliées (10) qui ont détecté le premier signal de balise (140),
**caractérisé en ce que** le procédé comprend en outre les étapes de:
- l'émetteur sans fil (102) du dispositif sans fil (100) transmettant le second signal de balise (120) comprenant le second paramètre de balise (122); et
- Le module de traitement de localisation (50):
- Se connectant à une pluralité de téléphones mobiles (30) présents dans la première plage (200);
- Déterminant la seconde plage (300) d'emplacements possibles du dispositif sans fil (100) en fonction des téléphones mobiles reliés (30) qui ont détecté le second signal de balise (120), la seconde plage (300) étant plus petite que la première plage (200).
